# EUROPÄISCHE PATENTSCHRIFT

(11) **EP 3 721 102 B1**
(45) Veröffentlichungstag und Bekanntmachung des Hinweises auf die Patenterteilung: **17.03.2021**
(21) Anmeldenummer: 20705033.7
(22) Anmeldetag: 11.02.2020
(51) Int. Cl.: F16B 37/08

(54) **ZWEITEILIGE SCHRAUBENMUTTER MIT HOHER ANDRÜCKKRAFT**
TWO-PIECE THREADED NUT WITH HIGH PRESSING FORCE
ÉCROU EN DEUX PARTIES PRÉSENTANT UNE FORCE DE PRESSION ÉLEVÉE

(30) Priorität: 18.02.2019 DE 102019104024; 30.04.2019 DE 102019111237
(43) Veröffentlichungstag der Anmeldung: 14.10.2020
(73) Patentinhaber: Schnier, Dietmar, 30826 Garbsen (DE)
(72) Erfinder: Schnier, Dietmar, 30826 Garbsen (DE)
(74) Vertreter: Freischem & Partner Patentanwälte mbB
(86) Internationale Anmeldenummer: PCT/EP2020/053373
(87) Internationale Veröffentlichungsnummer: WO 2020/169395

(56) Entgegenhaltungen:
- EP-B1- 1 982 082
- US-A- 4 622 730

## Beschreibung

Die Erfindung betrifft eine Schraubenmutter mit einem Innengewinde und zwei Mutterteilen gemäß dem Oberbegriff des Patentanspruchs 1.

Eine derartige zweiteilige Schraubenmutter ist bekannt aus dem europäischen Patent EP 1 982 082 B1. Die Offenbarung dieser Patentschrift wird durch Bezugnahme in die vorliegende Anmeldung aufgenommen. Die in dieser Patentschrift beschriebene Schraubenmutter wird nachfolgend im Detail beschrieben

An den zwei Mutterteilen der Schraubenmutter sind miteinander zusammenwirkende Verbindungselemente mit Führungsflächen angeordnet, welche in der Verwendungsposition der Mutterteile derart zusammenwirken, dass eine radiale Verschiebung der Mutterteile, die aus der Verwendungsposition heraus und von dem Außengewinde fort gerichtet ist, blockiert ist. Um in die blockierende Verwendungsposition zu gelangen, werden die Mutterteile der Schraubenmutter nicht nur in radialer Richtung verschoben, sondern um eine quer zur Achse des Innengewindes verlaufende Rotationsachse rotiert bzw. verschwenkt. Diese Rotationsbewegung ist nur bei gelöster Schraubverbindung möglich. Bei angezogener Schraubverbindung stützt sich die Schraubenmutter mit einer Anlagefläche oder mehreren Anlagepunkten auf einer gegenüberliegenden Stützfläche ab, die in axialer Richtung unverschiebbar mit dem Außengewinde verbunden ist. Mindestens ein Mutterteil weist mindestens einen Verriegelungsarm auf. Der Verriegelungsarm hat zwei Seiten, die in Bezug auf die Gewindeachsen in entgegengesetzte Richtungen orientiert sind. Diese Seiten können auch als Oberseite und Unterseite bezeichnet werden, wenn davon ausgegangen wird, dass die Gewindeachse von oben nach unten verläuft. Nur eine dieser zwei Seiten des Verriegelungsarms weist eine die Rotationsbewegung bewirkende Führungsfläche auf, welche gegen eine komplementäre und entgegen gesetzt orientierte Führungsfläche des anderen Mutterteils anliegt. Die andere Seite des Verriegelungsarms kann in der Praxis die Außenseite bzw. axiale Endfläche des Mutterteils (Oberseite oder Unterseite) bilden und sich gegen eine Stützfläche eines Bauteils abstützen, gegen die die Schraubenmutter gespannt wird.

Der Verriegelungsarm mit der Führungsfläche am ersten Mutterteil sowie der damit zusammenwirkende Materialabschnitt des zweiten Mutterteils können große Materialstärken aufweisen. Es ist möglich, dass die Materialstärke dieser Materialabschnitte jeweils der Hälfte gesamten Dicke der Mutter entspricht. Hierdurch lässt sich eine hohe Stabilität und Belastbarkeit dieser Materialabschnitte und damit der Mutter insgesamt erzielen. Ferner kann sich die Führungsfläche des Verriegelungsarms sowie die damit zusammenwirkende Führungsfläche über die gesamte Länge der Mutter erstrecken. Hierdurch ergibt sich eine große tragende Fläche und daher eine hohe Belastbarkeit.

Wenn die Anlagefläche der Schraubenmutter, welche beim Aufschrauben auf ein vertikales Außengewinde mit unten liegender Stützfläche von ihrer Unterseite gebildet wird, sich im verschraubten Zustand gegen die Stützfläche abstützt wird, ist das Verschwenken der Mutterteile blockiert und die Mutter kann nur durch Losschrauben von dem Außengewinde der Schraube oder Gewindestange gelöst werden. Wenn dagegen die Schraubenmutter nach dem Losschrauben um einige Umdrehungen einen gewissen Abstand zur Stützfläche aufweist, ist das Rotieren oder Verschwenken der Mutterteile möglich, die anschließend voneinander in radialer Richtung des Gewindes getrennt werden können.

Es sei darauf hingewiesen, dass die quer zur Achse des Innengewindes verlaufende Rotationsachse nicht notwendigerweise rechtwinklig zur Achse des Innengewindes verlaufen muss. Sie kann auch schräg oder windschief in Bezug auf die Achse des Innengewindes verlaufen. In der Praxis wird die Rotationsachse aber meist in etwa radial zur Innengewindeachse liegen.

Anders ausgedrückt, weist die Schraubenmutter einen oder mehrere Gewindegänge Abstand zur gegenüberliegenden Stützfläche auf, wenn die Schraubenmutter auf das Außengewinde aufgeschoben und aufgeschwenkt wird. Durch Verschrauben der Schraubenmutter um die der Anzahl der Gewindegänge entsprechende Umdrehungszahl stützt sich die Schraubenmutter gegen die gegenüberliegende Stützfläche ab, wodurch ein erneutes Verschwenken der Mutterteile der Schraubenmutter und ein Lösen der Mutterteile voneinander blockiert ist. Das Zusammenfügen der Mutterteile ist dadurch erleichtert, dass auf einer Seite des Verriegelungsarms eine die Rotationsbewegung der Mutterteile bewirkende Führungsfläche angeordnet ist. Die gegenüberliegende Seite des Verriegelungsarms, das heißt die in Bezug auf die Gewindeachse zur Führungsfläche entgegengesetzt orientierte Seite des Verriegelungsarms bildet eine Außenfläche der Schraubenmutter an deren Oberseite oder Unterseite und kann sich beim Festschrauben gegen eine Stützfläche abstützen. Da der Verriegelungsarm auf einer Seite mit einer gegenüberliegenden Stützfläche zur Erzielung der Rotationsbewegung zusammenwirkt, ist seine Dicke nicht kritisch und muss keine bestimmten Fertigungstoleranzen einhalten.

Die Schwenkbewegung oder Rotationsbewegung der Mutterteile um eine Achse quer zur Achse des Innengewindes beim Aufbringen der Mutterteile auf das Außengewinde stellt somit sicher, dass die gegenläufige Bewegung bei festgeschraubten Mutterteilen gesperrt ist. Die aus den Mutterteilen gebildete Schraubenmutter ist dadurch unlösbar auf dem Außengewinde fixiert.

Eine derartige Schraubenmutter hat gegenüber konventionellen Schraubenmuttern erhebliche Handhabungsvorteile. So muss nicht die gesamte Länge des Außengewindes durch Aufschrauben der Schraubenmutter überwunden werden. Die Schraubenmutter muss beim Aufbringen in ihre Verwendungsposition lediglich radial aufgeschoben und verschwenkt werden und anschließend um wenige Umdrehungen festgezogen werden. Es können auch beide Mutterteile der Schraubenmutter in einer teilweise zusammen geschobenen Stellung fixiert sein, in der sie über das Außengewinde bis zur Wunschposition geschoben werden. Erst hier werden die Mutterteile gegeneinander in die Verwendungsposition gedrückt und anschließend fest mit dem Außengewinde verschraubt.

Auch ist es möglich, eine zweiteilige Schraubenmutter an einem Außengewinde ohne freies Ende anzubringen. So kann die Schraubenmutter beispielsweise auf einen Gewindeabschnitt, der zu beiden Seiten von dickeren Stangenabschnitten ohne Gewinde begrenzt ist, aufgebracht werden. Die zweiteilige Schraubenmutter ermöglicht folglich außergewöhnliche Verbindungsarten, bei leichter Handhabung und kostengünstiger Herstellung.

In der Praxis umfassen die Verbindungselemente der Mutterteile gegeneinander anliegende und die Rotation bewirkende Führungsflächen, die um einen Winkel zur radial zur Achse des Innengewindes verlaufenden Ebene geneigt sind. Dieser Winkel der Führungsflächen zur radialen Ebene des Innengewindes bewirkt, dass die Mutterteile der Schraubenmuttern nicht einfach radial gegeneinander verschoben, sondern zusätzlich um eine Achse im Wesentlichen in einer radialen Ebene des Innengewindes verschwenkt werden müssen.

Die Führungsflächen sind in der Praxis vorzugsweise um einen Winkel von weniger als 20° zur radialen Ebene des Innengewindes geneigt. Hierdurch ist die zur Verbindung der Mutterteile erforderliche Schwenkbewegung nicht übermäßig groß und es wird eine Kollision der Konturen der Gewindeabschnitte der Mutterteile mit dem Außengewinde während der Schwenkbewegung vermieden. Sollten größere Neigungen gewünscht sein, müssten die kollidierenden Konturen der Gewindeabschnitte abgetragen werden. Die Führungsflächen können aber auch eine variable Neigung zur radialen Ebene aufweisen und beispielsweise zylinderartig gewölbt oder wendelförmig gewunden sein.

Zur Erzielung der Schwenkbewegung können die Führungsflächen auf verschiedene Weisen angeordnet sein. Bei einer Schraubenmutter, bei der die Innengewindeabschnitte der zwei Mutterteile entlang einer sich in Richtung der Gewindeachse erstreckenden Teilungsebene getrennt sind, kann jedes Mutterteil der Schraubenmutter zwei Führungsflächen aufweisen, die zu beiden Seiten einer rechtwinklig zur Teilungsebene verlaufenden Mittelebene angeordnet sind. Wenn man die Richtung, in der sich die Führungsflächen erstrecken als Längsrichtung bezeichnet, bildet die Mittelebene die mittlere Längsebene, wobei die zwei Führungsflächen zu beiden Seiten dieser Mittelebene verlaufen. Ferner können die zwei Führungsflächen eines Mutterteils in entgegengesetzte Richtungen in Bezug auf die Gewindeachse orientiert sein. Wenn man annimmt, dass die Gewindeachse von oben nach unten verläuft, weist also die Flächennormale der ersten Führungsfläche eines Mutterteils nach oben und die Flächennormale der zweiten Führungsfläche des gleichen Mutterteils nach unten. Das komplementäre Mutterteil ist entsprechend ausgebildet. Zumindest ein Mutterteil der Führungsflächen ist an den Verriegelungsarmen angeordnet. Diese Ausbildung der schrägen Führungsflächen kann bei geeignetem Führungsflächenverlauf zu der Schwenkbewegung führen. Zum Beispiel können die Führungsflächen auf einer um eine in der Mittelebene liegende radiale Achse gewundene Wendelfläche liegen, die eine Schraubbewegung beim Zusammenschieben der zwei Mutterteile vorgibt. Die zwei Führungsflächen können auch auf einer Zylindermantelfläche liegen, deren Zylinderachse in der Teilungsebene liegt. In diesem Fall werden die Mutterteile beim zusammenschieben um die Zylinderachse zueinander verschwenkt.

Alternativ kann eine Schraubenmutter aus zwei Mutterteilen, deren Innengewindeabschnitte entlang einer sich in Richtung der Gewindeachse erstreckenden Teilungsebene getrennt sind, ebene Führungsflächen aufweisen, die nicht gewölbte oder gewunden sind. Um die Schwenkbewegung hervorzurufen, kann jedes Mutterteil der Schraubenmutter zwei Führungsflächen auf beiden Seiten der Teilungsebene aufweisen. Diese Führungsflächen sind auf der ersten Seite der Teilungsebene in entgegengesetzte Richtungen in Bezug auf die Gewindeachse orientiert, als die auf der zweiten Seite der Teilungsebene. Mit anderen Worten weisen die Führungsflächen eines Mutterteils auf der ersten Seite der Teilungsebene nach oben und auf der zweiten Seite der Teilungsebene nach unten. Ferner sind die Führungsflächen auf der ersten Seite der Teilungsebene in die entgegengesetzte Richtung zur radialen Ebene des Gewindes geneigt als die auf der zweiten Seite der Teilungsebene. Mit anderen Worten verlaufen die Ebenen, in denen die Führungsflächen liegen, wie ein Spitzdach, dessen Giebel auf der Gewindeachse liegt. So können die Mutterteile ineinander geschoben werden, wobei die Achsen der Innengewindeabschnitte der Mutterteile leicht zueinander verschwenkt sind. In dem letzten Abschnitt der Verschiebebewegung werden die Mutterteile in die Verwendungsposition geschwenkt, und zwar um eine radial zur Gewindeachse verlaufende Schwenkachse, die in der Teilungsebene liegt. In der Verwendungsposition liegen die Achsen der Innengewindeabschnitte der zwei Mutterteile im Wesentlichen aufeinander und das aus den zwei Abschnitten bestehende Innengewinde umgreift ein Außengewinde mit entsprechenden Maßen im Wesentlichen spielfrei. Dann kann die so gebildete Schraubenmutter festgeschraubt werden.

Wie erwähnt, können die Führungsflächen eine Wölbung in Form eines Zylindermantelabschnitts aufweisen. Die Führungsfläche am ersten Mutterteil ist dabei konvex geformt, und die hiermit zusammenwirkende Führungsfläche am zweiten Mutterteil ist konkav gemäß der gleichen Zylindermantelfläche geformt. So kann durch die Führungsfläche die Annäherungsbewegung der zwei Mutterteile über eine längere Bewegungsbahn entlang der genannten Zylindermantelfläche geführt werden.

In der Praxis kann die Achse des Innengewindes mit einem Radius des Zylinders, auf dessen Mantelfläche die Führungsflächen verlaufen, zusammenfallen. Auch kann die Teilung der Mutterteile in einer den Zylinder diametral schneidenden Ebene liegen. Die Rotation der Mutterteile bei der Bewegung in die Verwendungsposition erfolgt dann durch Verschieben der zylindermantelförmigen Führungsflächen zueinander im Wesentlichen um die in der Teilungsebene der Mutterteile liegende Achse des Zylindermantels.

Wie ebenfalls weiter oben erwähnt, können in einer weiteren praktischen Ausführungsform die Führungsflächen auf einer gewundenen Fläche liegen. Die Windung verläuft zum Beispiel um eine Achse, die rechtwinklig zur Ebene der Teilung der Mutter und radial zur Achse des Innengewindes verläuft und die Gewindeachse etwa in der Mitte des Innengewindes schneidet. In diesem Fall werden die Mutterteile beim Zusammenfügen nicht um eine in der Teilungsebene liegende Achse gedreht sondern um die senkrecht zur Teilungsebene der Mutter verlaufende Achse entlang einer Schraubenbewegung gedreht.

In der Praxis kann das Material der Schraubenmutter, meist Stahl aber je nach Anwendung auch Kunststoff, elastisch verformbar sein. Die Form zweier gegeneinander anliegender Führungsflächen der Mutterteile kann geringfügig voneinander abweichen. Die Flächen können leicht unterschiedlich gewölbt oder zueinander geneigt sein. Beide Merkmale führen dazu, dass bei Erhöhung des in Richtung der Achse des Innengewindes wirkenden Drucks durch Festschrauben der Muttern eine gewisse Verformung der Mutterteile erfolgt, bis die Führungsflächen flächig gegeneinander anliegen. Die Führungsflächen der Schraubenmutterteile übernehmen dabei die Funktion einer Unterlegscheibe oder Federscheibe und sichern zusätzlich die Schraubverbindung gegen Lösen aufgrund dynamischer Lastwechsel. Gleiches gilt, wenn die Unterseite der Mutterteile nur mit einem oder zwei Anlagepunkten auf der darunterliegenden Stützfläche aufliegt. Die Stützfläche ist die in axialer Richtung zum Außengewinde fixierte Fläche, gegen die sich die Schraubenmutter beim Festschrauben abstützt. Wenn diese Abstützung nur durch ein oder zwei Anlagepunkte pro Mutterteil erfolgt, wird beim Festschrauben ein Drehmoment erzeugt, das die Mutterteile elastisch ein wenig verformt und dabei verkantet. Die Mutter steht also wie bei Verwendung einer Unterlegscheibe unter elastischer Spannung, welche bei einer dynamischen Belastung der Verschraubung dafür sorgt, dass die Verschraubung aufgrund der Spannung selbsthemmend blockiert ist.

Zusätzlich können die Verbindungselemente der Mutterteile gegeneinander anliegende Führungsflächen aufweisen, die in einer sich parallel zur Achse des Innengewindes erstreckenden Ebene liegen. Diese sich parallel zur Achse des Innengewindes erstreckende Ebene definiert vorzugsweise die Richtung der radialen Verschiebung der zwei Schraubenmutterteile zueinander. Die zusätzlichen Führungsflächen bewirken also die Führung der Mutterteile in radialer Richtung des Gewindes, nicht aber die Rotationsbewegung. Ferner bilden zusätzliche Führungsflächen in einer axialen Ebene (auch vertikale Ebene genannt) die in der Verwendungsposition wirksamen Anschläge für die Verschiebung der Mutter. Diese zusätzlichen Führungsflächen bewirken wie gesagt kein Verschwenken der Schraubenmutterteile zum Erreichen der Verwendungsposition und wirken folglich auch nicht bei der Verriegelung der Schraubenmutterteile aneinander mit.

Wie erwähnt, bewirken die Verbindungselemente, welche ein Verschwenken der Schraubenmutterteile zum Erreichen ihrer Verwendungsposition notwendig machen, dass die Schraubenmutter beim Festschrauben an diesem Verschwenken dadurch gehindert ist, dass sich ihre Anlagefläche gegen eine mit dem Außengewinde verbundene Stützfläche abstützt. Dabei muss die Anlagefläche der Schraubenmutter nicht vollflächig ausgebildet sein. Es ist ausreichend, wenn jedes Mutterteil der Schraubenmutter mindestens einen, vorzugsweise zwei oder drei Anlagepunkte aufweist, die beim Festschrauben gegen die mit dem Außengewinde in axialer Richtung fest verbundene Stützfläche anliegen. Die Anlagefläche wird von der Seite des Verriegelungsarms gebildet, die der die Rotation bewirkenden Führungsfläche gegenüber liegt.

Die Anlagefläche jedes Mutterteils der Schraubenmutter kann an einem Rand eine Schrägfläche aufweisen, welche den Winkel der Schwenkbewegung des Schraubenmutterteils definiert. Hierzu weist die Schrägfläche zur Anlagefläche einen Winkel auf, der dem Rotationswinkel des entsprechenden Schraubenmutterteils beim Bewegen dieses Mutterteils in seine Verwendungsposition entspricht. Mit anderen Worten können die zwei Schraubenmutterteile durch einen Druck auf ihren Rand um einen Winkel verschwenkt werden, der dem Schwenkwinkel aus der Montageposition in die Verwendungsposition entspricht. In diesem verschwenkten Zustand können die Schraubenmutterteile durch die Stützfläche ein wenig ineinander geschoben werden. Im letzten Abschnitt der Bewegung werden die Schraubenmutterteile in ihre Verwendungsposition geschwenkt und anschließend festgeschraubt, wobei sie aufgrund der Abstützung der Anlagefläche der Schraubenmutter gegen die Stützfläche arretiert werden.

Ähnlich kann eine Schraubenmutter mit punktförmiger Anlage ausgebildet werden. Ein Anlagepunkt eines Schraubenmutterteils sollte mit wenigstens zwei weiteren Punkten im Randbereich des Schraubenmutterteils eine Schrägfläche definieren, deren Winkel dem Rotationswinkel entspricht, um den das Mutterteil bei der Montage gedreht wird. Wiederum kann durch Drücken auf den Randbereich ein Verschwenken des Schraubenmutterteils in die Montageposition erfolgen. In dieser Position kann das Schraubenmutterteil um ein gewisses Maß in das komplementäre Schraubenmutterteil geschoben werden. Anschließend erfolgt die manuelle Schwenkbewegung, wobei die Gewindeabschnitte beider Schraubenmutterteile sich um das Außengewinde legen und die Verwendungsposition erreicht wird.

In der Praxis kann in mindestens einem Endbereich des Innengewindeabschnitts mindestens eines der Mutterteile die Gewindegänge abgetragen sein, um die Rotation der Mutterteile bei der Schwenkbewegung in die Verwendungsposition zu ermöglichen. Je nach gewählter Bewegungsbahn der Relativbewegung der Mutterteile zueinander vermeidet ein Abtragen der Gewindegänge ein Blockieren der Schließbewegung. Dabei können die Innengewindeabschnitte während der Schwenkbewegung um ein geringes Maß gegen das Außengewinde anschlagen, so dass bei der Schließbewegung in die Verwendungsposition eine elastische Verformung der Mutterteile erforderlich ist. Hierdurch schnappen die Mutterteile um das Außengewinde und sind nur durch einen erhöhten Kraftaufwand, der die genannte elastische Verformung hervorruft wieder von dem Außengewinde lösbar.

Die zweiteilige Schraubenmutter kann selbstverständlich auch ein selbstschneidendes Gewinde aufweisen. Dabei kann die Abtragung im Bereich des Gewindes so gewählt werden kann, dass das Gewinde wie ein Gewindeschneider die Gewindegänge des Außengewindes schneidet. Damit könnte die Schraubenmutter noch besser an nachgiebigen Materialien ohne Gewinde, wie Kunststoffstangen oder kunststoffummantelten Kabeln, zum Beispiel als Zugentlastung bei Stromkabeln eingesetzt werden.

Durch besondere Ausgestaltung der Schraubenmutter können die zwei Mutterteile der Schraubenmutter identisch sein. Dies ist beispielsweise bei einem zweigängigen Gewinde ohne weiteres möglich, wenn Mutterteile rotationssymmetrisch, das heißt bei Drehung um 180° identisch zueinander, in Bezug auf die Gewindeachse oder eine in der Mutterteilungsebene und radial zur Gewindeachse verlaufende Symmetrieachse sind. Bei einem üblichen eingängigen Gewinde können die identischen Schraubenmutterteile rotationssymmetrisch in Bezug auf eine in der Mutterteilungsebene liegende und radial zur Gewindeachse verlaufende Symmetrieachse sein. Die Mutterteile weisen dabei vorzugsweise eine nach oben gerichtete und eine nach unten gerichtete Schrägfläche auf, die an zwei rechtwinklig zur Mutterteilungsebene verlaufenden Verriegelungsarmen angeordnet sind, welche als Verbindungselemente wirken. Diese Schrägflächen legen sich beim Verbinden auf die gegenüberliegenden Schrägflächen des komplementären Mutterteils. Die Mutterteile werden beim Verbinden auf einander zu verschoben und schraubenartig ineinander gedreht.

Eine Schraubenmutter, bestehend aus zwei identischen Mutterteilen, hat den Vorteil, dass sie in hoher Stückzahl sehr kostengünstig herstellbar ist. Insbesondere kann jedes Mutterteil der Schraubenmutter in einem Formpressvorgang hergestellt sein. Außerdem kann der Benutzer beliebige Mutterteile miteinander verbinden und muss nicht zwei zueinander passende Mutterteile heraussuchen.

Bei Muttern mit eingängigem Innengewinde, die äußerlich symmetrische Formen haben mögen, deren Gewindegänge aber nicht symmetrisch sind, sowie bei unsymmetrischen Mutterteilen besteht die Gefahr, dass der Anwender versucht, die Mutterteile falsch zusammenzusetzen. Oberseite und Unterseite solcher Mutterteile können zusätzlich markiert sein, beispielsweise durch Einkerbungen oder sonstige Markierungen, um Fehler beim Zusammensetzen zu vermeiden. Ein falsches Zusammenfügen kann aber auch durch geeignete Formgebung der Verbindungselemente verhindert werden, indem die äußere Symmetrie nur in Bezug auf eine Achse existiert und in Bezug auf die zweite Achse durch unterschiedliche Ausbildung der Führungsflächen aufgehoben ist. In diesem Fall können die Mutterteile offensichtlich nicht falsch zusammengefügt werden.

Zusätzlich können die Mutterteile der Schraubenmutter miteinander zusammenwirkende Halteelemente umfassen, welche diese Mutterteile in der Verwendungsposition oder kurz davor, das heißt in zumindest teilweise zusammengeschobener Stellung aneinander fixieren. Ohne derartige Halteelemente besteht die Gefahr, dass bei einem Aufschrauben der Schraubenmutter auf dem Außengewinde sich die Mutterteile ungewollt voneinander lösen, solange sich die Anlagefläche nicht fest gegen die Stützfläche abstützt.

Die Halteelemente können beispielsweise von einander anziehenden Magneten oder einem Magneten und einem ferromagnetischen Materialabschnitt gebildet werden. Es sind aber auch formschlüssig ineinandergreifende Halteelemente wie Rastvorsprünge und hierzu komplementäre Rastausnehmungen möglich, welche ein Verrasten der Mutterteile der Schraubenmutter in der Verwendungsposition sicherstellen. Die Fixierung der Mutterteile am Außengewinde oder aneinander kann aber auch durch andere geeignete Maßnahmen, insbesondere Formgebung der Verbindungselemente (Hinterschneidungen, Verformung der Mutter, Reibung/Spannung am Außengewinde und aneinander) erreicht werden.

Die zweiteilige Schraubenmutter kann wie folgt benutzt werden. Beim Zusammenschieben der Mutterteile in radialer Richtung erfolgt zusätzlich zur Verschiebung der Mutterteile zumindest im letzten Bewegungsabschnitt, kurz vor der Verwendungsposition, eine Rotation bzw. ein Verschwenken der Mutterteile um eine quer zur Achse des Innengewindes verlaufende Rotationsachse.

Bei dieser Rotation können zwei komplementär gewölbte Führungsflächen der Mutterteile aufeinander gleiten.

Wie erwähnt, kann jedes der Mutterteile mit einer in seinem Randbereich befindlichen Schrägfläche auf eine Stützfläche gelegt werden, die mit dem Außengewinde verbunden sind. Hierdurch weisen die Mutterteile zueinander eine Schrägstellung auf, die ein Ineinanderfügen der Mutterteile begünstigt. Die Mutterteile werden also in einer Montagestellung aufeinander zu bewegt, in der ihre Verbindungselemente ineinander greifen und nachfolgend die weitere Bewegung der Mutterteile führen.

Die Schraubenmutter kann im Bereich eines Endes des Innengewindes eine sich zur Achse des Innengewindes hin erstreckende Schulter aufweisen. Diese Schulter hat vorzugsweise eine ringförmige zur Mitte des Innengewindes ragende Form und ist jeweils zur Hälfte an einem Mutterteil angeordnet. Die radial nach innen ragende Schulter kann nach Art einer Überwurfmutter einen radialen Absatz eines mit der Mutter an einem Außengewindes festzuschraubenden Gegenstands, z.B. eines Rohrstutzens, umgreifen und beim Festschrauben gegen eine Stirnwand des Außengewindes drücken. Die radiale Schulter kann von einer Wandung einer sich an das Innengewinde anschließenden Nut gebildet werden. Anders als bei üblichen Schrauben ist es nicht erforderlich, dass der radiale Absatz des festzuschraubenden Gegenstands durch das Innengewinde hindurchgeschoben werden muss, bevor er gegen die nach innen ragende Schulter anliegt. Der radiale Absatz des Gegenstands kann beim Zusammenschieben der Mutter in eine Nut eingefügt werden, in der der radiale Absatz mit geringem Spiel aufgenommen ist. Es ist aus diesem Grund auch nicht nötig, dass der radiale Absatz und die Nut oder die Schulter der Mutter rund sind. Sie können von der runden Form abweichende, komplementäre Formen aufweisen und formschlüssig beim Zusammenschieben der Mutterteile ineinandergefügt werden.

Schließlich offenbart die EP 1 982 082 B1 ein Werkzeug zum Anbringen einer Schraubenmutter der oben beschriebenen Art. Dieses Werkzeug weist für jedes Mutterteil der Schraubenmutter eine Haltevorrichtung auf. Die Haltevorrichtungen sind über Antriebsmittel, insbesondere Gelenkverbindungen und Hebelverbindungen, derart miteinander gekoppelt, dass sie die Verschiebe und Schwenkbewegung der Mutterteile entweder aktiv ausführen oder zumindest passiv zulassen. Zunächst führen sie eine Verschiebebewegung zueinander in einer radial zur Achse des Innengewindes verlaufenden Richtung aus. Anschließend führen sie zumindest in dem letzten Bewegungsabschnitt, bevor die Mutterteile in der Schraubenmutter die Verwendungsposition erreicht haben, eine Schwenk oder Rotationsbewegung um eine quer zur Achse des Innengewindes verlaufende Rotationsachse aus. Zu diesem Zweck kann die Haltevorrichtung entweder in der vorgegebenen Bewegungsbahn angetrieben sein oder zumindest durch Gelenke die erforderlichen Freiheitsgrade aufweisen.

Zum Öffnen der Schraubenmutter kann das Werkzeug eine gegenläufige Bewegung ausführen. Das Werkzeug kann beispielsweise nach Art einer Zange ausgebildet sein, wobei die Haltevorrichtungen die beiden Backen der Zange bilden. Sie sind über ein beliebiges Getriebe derart durch die beiden Hebel der Zange angetrieben, dass die zum Erreichen der Verwendungsposition erforderliche Schwenkbewegung oder Rotationsbewegung ausgeführt wird. Insbesondere bei Schraubenmutterteilen mit Halteelementen kann das Werkzeug sicherstellen, dass die Haltekraft der Halteelemente zum Lösen der Schraubenmutterteile sicher überwunden wird, falls ein manuelles Entfernen der Schraubenmutterteile von dem Außengewinde nicht möglich ist.

Die oben beschriebene Schraubenmutter der EP 1 982 082 B 1 ermöglicht dauerhafte und sichere Verschraubungen bei einer Vielzahl von Anwendungsfällen. Die axiale Andrücckraft dieser Schraubenmutter erzielt im Wesentlichen Werte, die denen der axialen Andrückkraft herkömmlicher Schraubenmuttern entspricht.

Eine weitere Schnellspannmutter zum Anbringen an einem Gewindeabschnitt eines Bolzens ist aus der Druckschrift GB 2 469 829 A bekannt. Sie umfasst einen ersten und einen zweiten Abschnitt, die jeweils ein halbzylindrisches Innengewinde aufweisen. Eine Gelenkplatte ist schwenkbar mit dem ersten Abschnitt verbunden und ist verschiebbar mit dem zweiten Abschnitt verbunden, so dass der zweite Abschnitt in Bezug auf den ersten Abschnitt radial und schwenkbar beweglich ist. Ein Schnappriegel verbindet den ersten und den zweiten Abschnitt lösbar. Eine ähnliche Schnellspannmutter geht aus der DE 690 00 653 T2 hervor. Hier sind der erste und der zweite Abschnitt durch zwei Verbindungsschrauben miteinander verbunden, die sich zu beiden Seiten des Innengewindes erstrecken.

Aus den Druckschriften US 4,622,730 A, 4,927,305, US 5,075,950 A, US 5,083,889 A and US 6,112,396 A sind Spannelemente mit Vielfachschrauben bekannt, welche es erlauben, hohe Vorspannkräfte präzise Einzubringen. Zu diesem Zweck weisen die Mutternkörper de Spannelemente Andrückgewinde auf, in die Andrückschrauben eingeschraubt sind. Durch die Andrückschrauben können mit relativ geringem Anziehdrehmoment hohe Andrückkräfte erzeugt werden, die sich durch Drehen einer herkömmlichen Gewindemutter gar nicht oder nur mit extrem hohem Anziehdrehmoment erzielen lassen.

Aufgabe der Erfindung ist es, die Konstruktion der zweiteiligen Schraubenmutter derart anzupassen, dass sie das Erzeugen hoher Andrückkräfte ermöglicht.

Diese Aufgabe wird erfindungsgemäß dadurch gelöst, dass eine zweiteilige Schraubenmutter der oben beschriebenen und aus der EP 1 982 082 B1 bekannten Art mehrere Andrückgewinde aufweist, die um das Innengewinde herum angeordnet sind und die Andrückschrauben aufnehmen, welche in axialer Richtung aus einer ersten axialen Endfläche der Schraubenmutter herausschraubbar sind und im Bereich einer zweiten axialen Endfläche der Schraubenmutter eine Aufnahme für ein Schraubwerkzeug aufweisen, wobei mindestens ein Andrückgewinde in dem ersten Verriegelungsarm angeordnet ist, der die erste axiale Endfläche aufweist, und wobei der mit dem ersten Verriegelungsarm zusammenwirkende zweite Verriegelungsarm mit der zweiten axialen Endfläche eine Aussparung aufweist, welche von der Andrückschraube durchragt wird.

Um eine hinreichende Anzahl (z.B. 4, 6 oder 8) Andrückschrauben in dem das Innengewinde umgebenden Material anordnen zu können, ist es erforderlich, dass mindestens eine Andrückschraube in einem Andrückgewinde in einem Verriegelungsarm angeordnet wird. Um dies zu ermöglichen, wird in dem mit dem ersten Verriegelungsarm zusammenwirkenden zweiten Verriegelungsarm, der die zweite axiale Endfläche aufweist, eine Aussparung angeordnet, welche von der Andrückschraube durchragt wird. Die Kontur der Aussparung ist so zu wählen, dass die Andrückschraube beim Öffnen der zweiteiligen Schraubenmutter von der geschlossenen Verwendungsposition in eine geöffnete Stellung, in der das Innengewinde der Schraubenmutter über ein komplementäres Außengewinde geschoben werden kann, innerhalb der Aussparung frei beweglich ist, ohne die Verschiebung der zueinander beweglichen Mutterteile zu behindern.

Die Andrückgewinde können derart um das Innengewinde angeordnet sein, dass kein Kippmoment entsteht. Zu diesem Zweck können die Andrückgewinde zum Beispiel in regelmäßigen Winkelabständen und/oder jeweils einander paarweise diametral gegenüberliegend entlang eines Kreises um das Innengewinde angeordnet sein.

In der Praxis ist die Aussparung als Langloch ausgebildet, das die Andrückschraube beim Verlagern des zweiten Mutterteils zum ersten Mutterteil aus der Verwendungsposition heraus in die geöffnete Stellung führt.

Der erste Verriegelungsarm mit dem Andrückgewinde wirkt also mit dem zweiten Verriegelungsarm zusammen. Das Andrückgewinde mündet in der Führungsfläche des ersten Verriegelungsarms. Das Langloch mündet in der Führungsfläche des zweiten Verriegelungsarms und erstreckt sich in axialer Verlängerung des Andrückgewindes, wenn die Mutterteile der Schraubenmutter in der Verwendungsposition sind oder leicht geöffnet zwischen der Verwendungsposition und der geöffneten Stellung, die ein Verschieben des Innengewindes der Mutter auf einem komplementären Außengewinde zulässt. Der Verlauf der Mittellinie des Langlochs ist derart gewählt, dass die Bewegung der Andrückschraube beim Öffnen und Schließen durch Verschieben der zwei Mutterteile zueinander ermöglicht ist. Bei dieser Bewegung wird die Andrückschraube innerhalb des Langlochs geführt. Die Andrückschraube im Bereich der Verriegelungsarme erfüllt folglich nicht nur die Funktion der Erzeugung der Andrückkraft sondern fixiert die Mutterteile aneinander und erleichtert auf diese Weise ihre Handhabung.

Das Langloch hat einen Verlauf und eine Dimensionierung, die das Aufschwenken der Mutterteile aus der Verwendungsposition in eine geöffnete Stellung ermöglichen, in der die geöffnete Schraubenmutter in axialer Richtung entlang eines Außengewindes verschiebbar ist, das komplementär zum Innengewinde ausgebildet ist. Auf diese Weise kann die Schraubenmutter schnell und einfachüber große Längen des Außengewindes verschoben werden. Es ist weiterhin möglich, die Dimensionierung des Langlochs so zu begrenzen, dass die Mutterteile nicht voneinander gelöst werden können, ohne die das Langloch durchragende Andrückschraube zu entfernen. Da die hier beschriebenen Schraubenmuttern in der Regel sehr große Innengewinde aufweisen, wird durch die schrittweise Befestigung der Mutterteile die Handhabung erleichtert. In einem ersten Schritt wird das erste mit dem zweite Mutterteil verbunden, indem die Andrückschrauben durch die Langlöcher in dem zweiten Verriegelungsarms gesteckt und in das Andrückgewinde des ersten Verriegelungsarms eingeschraubt werden. Dabei kann die geöffnete Schraubenmutter schon eine Gewindestange umgreifen. In der geöffneten Stellung ist sie axial entlang des Außengewindes der Gewindestange verschiebbar. Als nächstes wird die Schraubenmutter in die geschlossene Verwendungsposition gebracht. Hierzu werden die zwei Mutterteile aufeinander zu verschoben und dabei verschwenkt. In der Verwendungsposition umgreift die Schraubenmutter das Außengewinde mit geringem Gewindespiel und kann so in einer axialen Richtung eine Andrückkraft gegen eine Stützfläche erzeugen. Durch das Abstützen gegen die Stützfläche werden die Mutterteile gegeneinander in der Verwendungsposition fixiert. Im letzten Schritt werden die Andrückschrauben angezogen und erzeugen die vorgeschriebene Andrückkraft.

In der Praxis können die Innengewindeabschnitte der zwei Mutterteile entlang einer sich in Richtung der Gewindeachse erstreckenden Teilungsebene getrennt sein. Dabei kann jedes Mutterteil der Schraubenmutter zwei Verriegelungsarme aufweisen, die zu beiden Seite einer rechtwinklig zur Teilungsebene verlaufenden Mittelebene angeordnet sind. So ist es möglich, im Wesentlichen symmetrisch einander diametral gegenüberliegend an der Schraubenmutter Andrückschrauben anzubringen, die die Verriegelungsarme fixieren.

In der Praxis können die Führungsflächen geneigt oder gewölbt sein. In Verbindung mit den Zeichnungen wird eine Ausführungsform mit entlang eines Zylindermantels gewölbten Führungsflächen beschrieben. Die Mutterteile werden in einer Richtung rechtwinklig zur Teilungsebene des Innengewindes gegeneinander verschoben, wobei sie auf der zylinderförmig gewölbten Führungsfläche gleiten. Das Langloch für die Andrückschraube kann sich in diesem Fall im Wesentlichen gerade erstrecken und in den Verriegelungsarm eingefräst werden. Wenn bei anderen Ausführungsformen die Führungsflächen der Verriegelungsarme schräg oder auf einer gewundenen Fläche verlaufen, können die Langlöcher gewunden sein, so dass die Andrückschraube der Rotationsbewegung der Mutterteile folgen kann. Derartige Langlöcher sind mit additiven Fertigungsverfahren herstellbar.

In der Praxis kann jedes Mutterteil mindestens ein Andrückgewinde in einem Bereich aufweist, in dem sich das Mutterteil von der ersten bis zur zweiten axialen Endfläche erstreckt. Diese Bereiche ohne Verriegelungsarme grenzen im Wesentlichen an den Innengewindeabschnitt des jeweiligen Mutterteils an. Insgesamt sind die Andrückschrauben regelmäßig entlang des Umfangs des Innengewindes zu verteilen. Je mehr Andrückschrauben vorhanden sind, desto geringer ist das erforderliche Anziehdrehmoment jeder Andrückschraube.

Wie oben erläutert, kann die Andrückschraube, die die Aussparung bzw. das Langloch des zweiten Verriegelungsarms durchragt und in das Andrückgewinde des ersten Verriegelungsarms eingeschraubt ist, die zwei Mutterteile verschiebbar aber untrennbar miteinander verbinden. Zum Trennen der Mutterteile ist ein Ausschrauben der Andrückschraube aus dem Andrückgewinde erforderlich. Das Öffnen und Schließen des Innengewindes ist mit eingeschraubter Andrückschraube möglich, nicht aber das Trennen der Mutterteile voneinander.

Eine praktische Ausführungsform und weitere Vorteile der Erfindung sind nachfolgend im Zusammenhang mit den Zeichnungen beschrieben.
Fig. 1 zeigt eine dreidimensionale schräge Seitenansicht einer Befestigungs- und Spannanordnung mit einer zweiteiligen Schraubenmutter mit Andrückschrauben in der geschlossenen Verwendungsstellung.
Fig. 2 zeigt eine der Fig. 1 entsprechende Darstellung der Befestigungs- und Spannanordnung in der halb geöffneten Stellung.
Fig. 3 zeigt eine der Fig. 1 und 2 entsprechende Darstellung der Befestigungs- und Spannanordnung in der vollständig geöffneten Stellung.
Fig. 4 zeigt eine der Fig. 3 entsprechende Darstellung mit von der Stützfläche fort geschobener Schraubenmutter.
Fig. 5 zeigt eine vergrößerte und isolierte dreidimensionale Darstellung der Schraubenmutter aus Fig. 4 in geöffneter Stellung.
Fig. 6 zeigt eine seitliche dreidimensionale Darstellung der weiter entlang der zylindrisch gewölbten Führungsflächen zueinander verschobenen Mutterteile der Schraubenmutter aus Fig. 5.
Fig. 7 zeigt eine dreidimensionale schräge Draufsicht auf die Schraubenmutter aus Fig. 6.
Fig. 8 zeigt eine isolierte Darstellung des ersten Mutterteils der Schraubenmutter aus den Fig. 5 - 7.
Fig. 9 zeigt eine isolierte Darstellung des zweiten Mutterteils der Schraubenmutter aus den Fig. 5 - 7.

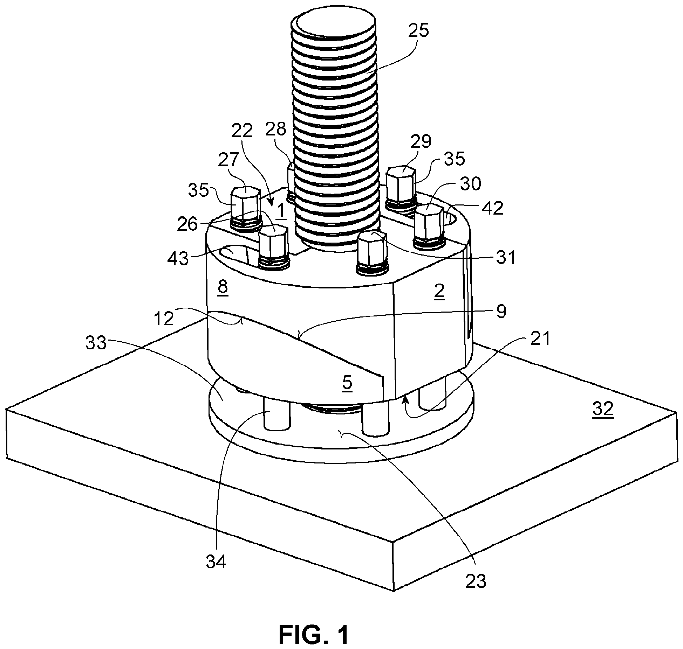

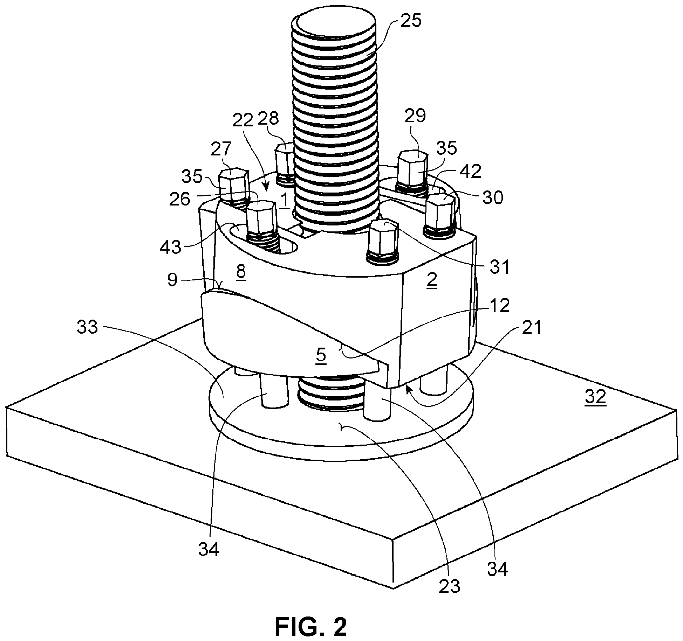

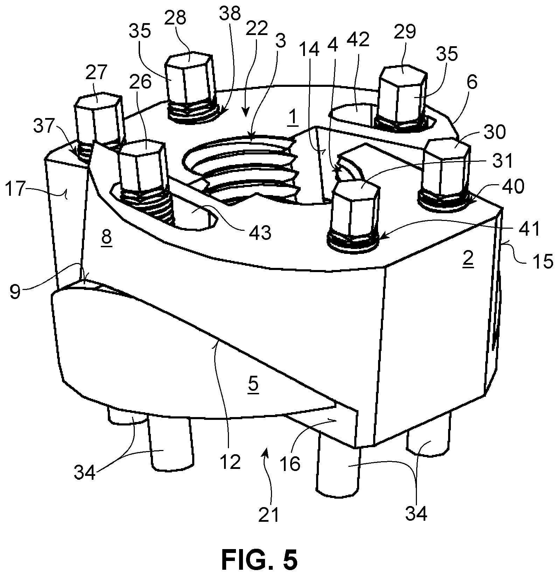

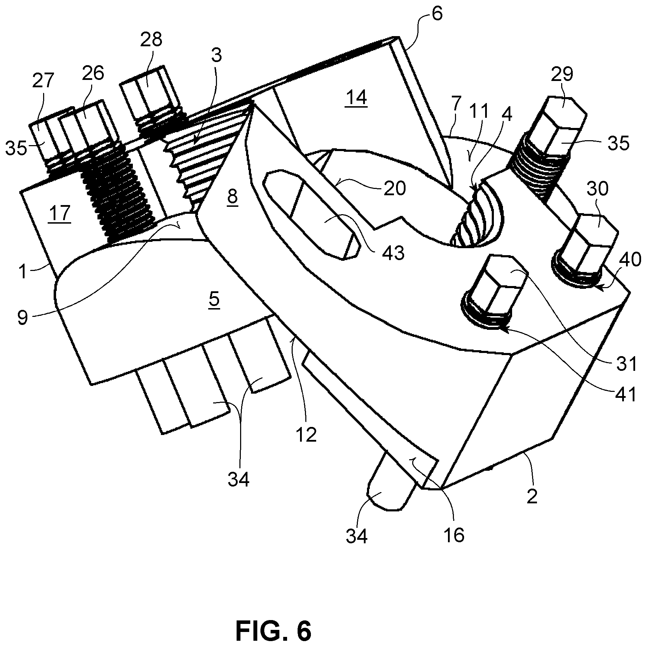

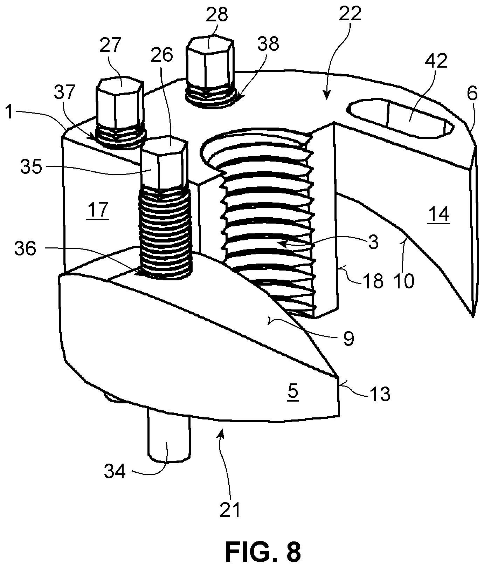

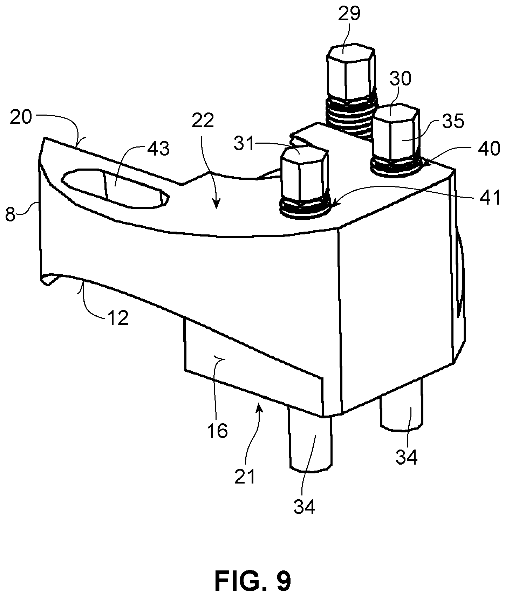

Die Fig. 1 - 4 zeigen eine Befestigungs- und Spannanordnung mit einer Ausführungsform der erfindungsgemäßen Schraubenmutter. Die Schraubenmutter besteht aus zwei Mutterteilen 1, 2 und entspricht in ihrer Funktionsweise der Ausführungsform der Figuren 9 - 13 der EP 1 982 082 B1. Die Schraubenmutter ist isoliert und vergrößert in den Fig. 5 bis 7 dargestellt und die einzelnen Mutterteile sind in Fig. 8 und 9 zu erkennen.

Das Mutterteil 1 weist einen ersten, sich über 180° erstreckenden Innengewindeabschnitt 3 auf. Das zweite Mutterteil 2 weist den zweiten, gegenüberliegenden Innengewindeabschnitt 4 auf, der sich ebenfalls sich über 180° erstreckt. Die beiden Innengewindeabschnitte 3, 4 sind in einer Teilungsebene geteilt, die die Achse des Innengewindes enthält. Jedes der Mutterteile 1, 2 weist zwei Verriegelungsarme 5,6 bzw. 7,8 auf. Dabei erstrecken sich die zwei Verriegelungsarme 5,6 bzw. 7,8 jedes Mutterteils 1 bzw. 2 zu beiden Seiten einer Mittelebene, die rechtwinklig zur Teilungsebene des Innengewindes verläuft.

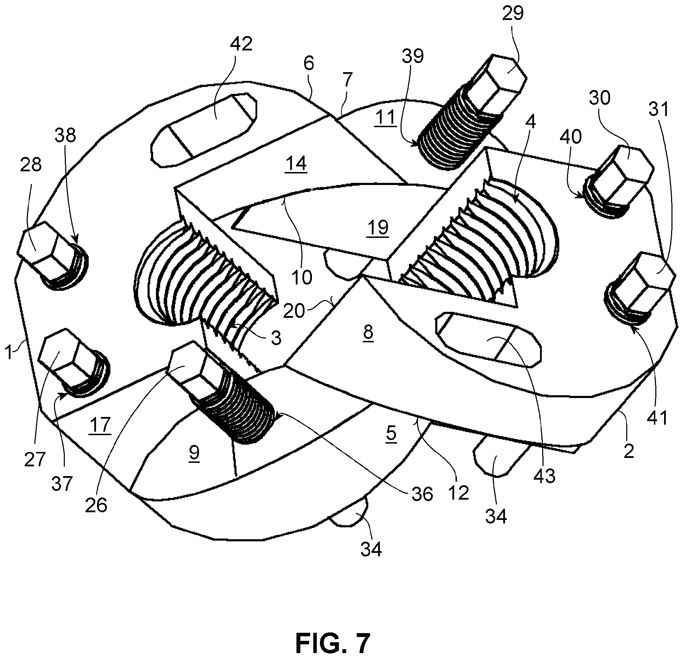

Die beiden Verriegelungsarme 5,6 bzw. 7,8 der zwei Mutterteile 1 bzw. 2 weisen jeweils eine gewölbte Führungsflächen 9 - 12 auf, die im Wesentlichen radial zur Achse des Innengewindes verläuft. Die zwei Führungsflächen 9, 10 bzw. 11, 12 jedes Mutterteils 1 bzw. 2 weisen im Wesentlichen in entgegengesetzte Richtungen. So weist beim ersten Mutterteil 1 die in Fig. 7 für den Betrachter vorne liegende Führungsfläche 9 nach oben und die weiter hinten liegende Führungsfläche 10 nach unten. Entsprechend und ergänzend weist beim zweiten Mutterteil 2 die in Fig. 7 hinten liegende Führungsfläche 11 des zweiten Mutterteils 2 nach oben und die weiter vorne liegende Führungsfläche 12 des Mutterteils 2 nach unten. Am ersten Mutterteil 1 bildet die nach oben weisende Führungsfläche 9 die Oberseite des ersten Verriegelungsarms 5, der sich mit seiner Unterseite auf der Stützfläche 23 abstützt (s. Fig. 1). Die nach unten weisende Führungsfläche 12 des zweiten Mutterteils 2 liegt in der Verwendungsposition gegen die nach oben weisende Führungsfläche 9 des ersten Verriegelungsarms 5 des ersten Mutterteils 1 an. Die Führungsfläche 12 ist dem zweiten Verriegelungsarm 8 des zweiten Mutterteils 2 zugeordnet, welcher von der Stützfläche 23 entfernt auf dem Verriegelungsarm 5 des ersten Mutterteils 1 aufliegt.

Entsprechend liegt die nach unten weisende Führungsfläche 10 am zweiten Verriegelungsarm 6 des ersten Mutterteils 1 gegen die nach oben weisende Führungsfläche 11 des ersten Verriegelungsarms 7 des zweiten Mutterteils 2 an. Die Verwendungsposition ist in Fig. 1 dargestellt.

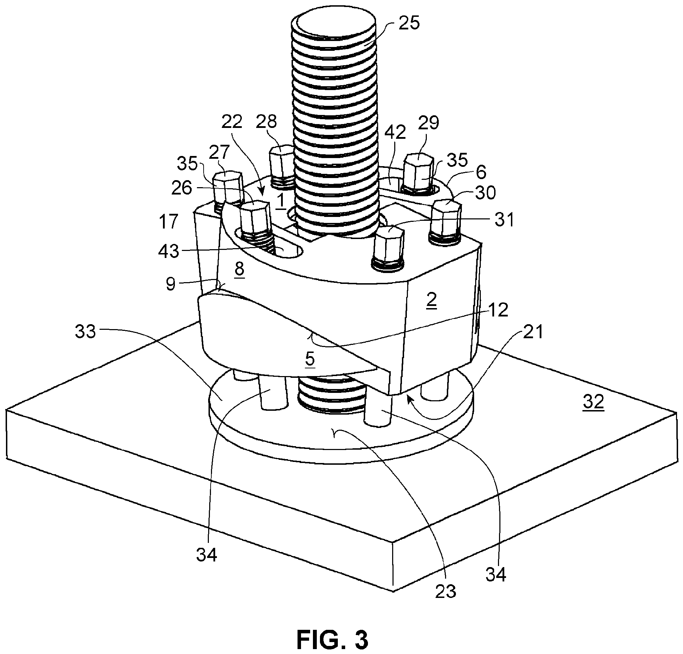

Die Art der Schwenkbewegung, welche die zwei Mutterteile 1, 2 beim Öffnen zueinander ausführen, ergibt sich aus der Betrachtung der Fig. 1 bis 3. In Fig. 3 liegen die Führungsflächen 9 und 12 aneinander an, aber die Mutterteile 1, 2 sind soweit aufgeschwenkt, dass sie ohne Probleme auf ein zum Innengewinde komplementär ausgebildetes Außengewinde 25 geschoben werden können. In Fig. 1 sind die Mutterteile 1, 2 in die Verwendungsposition geschwenkt, in der das Innengewinde geschlossen ist und das Außengewinde 25 mit geringem Spiel formschlüssig umgibt. Alle gewölbten Führungsflächen 9 - 12 verlaufen entlang einer gemeinsamen Zylindermantelfläche, welche um eine rechtwinklig zur Gewindeachse verlaufende Zylinderachse, die in der Teilungsebene des Innengewindes liegt, gewölbt ist. Auf diese Weise werden die zwei Mutterteile 1, 2 durch Verschwenken um die genannte Zylinderachse entlang dieser Zylindermantelfläche aneinander gefügt oder voneinander gelöst.

Ein Verkippen der Mutterteile 1, 2 um eine parallel zu den Verriegelungsarmen 5 - 8 verlaufende Achse während des Verschwenkens entlang der zylindermantelförmigen Führungsflächen 9 - 12 wird durch gegeneinander anliegende zusätzliche ebene Führungsflächen 13 - 20 vermieden, die sich parallel zur Achse des Innengewindes und in die Verschieberichtung der Mutterteile, d.h. senkrecht zur Teilungsebene des Innengewindes, erstrecken. Die ebenen Führungsflächen 13 - 20 liegen jeweils paarweise gegeneinander an.

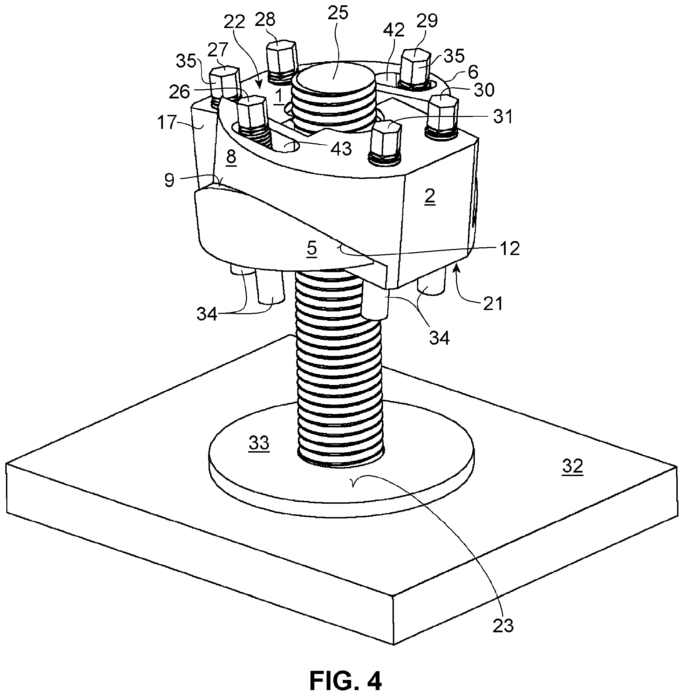

Das Verschwenken entlang der zylindermantelförmig gewölbten Führungsflächen 9 - 12 führt dazu, dass die axialen Endflächen in Richtung der Achse des Innengewindes, d.h. die Oberseite 22 und die Unterseite 21 der Schraubenmutter von ihrer in der Verwendungsposition (siehe Fig. 4 - 6) ebenen Ausgestaltung abweichen. Folglich ist ein Verschwenken und Lösen der Schraubenmutter von einem Außengewinde 25, auf welches das Innengewinde der geschlossenen Schraubenmutter geschraubt ist, blockiert, wenn sich erste axiale Endfläche, in den Zeichnungen die Unterseite 21 durch das Festschrauben an dem Außengewinde 25 über weiter unten beschriebene Andrückschrauben 26 - 31 gegen eine Stützfläche 23 abstützt.

Der Bewegungsablauf beim Verbinden der Mutterteile 1, 2 der Schraubenmutter ist wie folgt. Die Mutterteile 1, 2 werden rechtwinklig zur Teilungsebene des geschlossenen Innengewindes zueinander verschoben und dabei um eine in der Teilungsebene 25 des Innengewindes verlaufende, sich rechtwinklig zur Gewindeachse erstreckende Rotationsachse verschwenkt.

Die Schraubmutter weist ferner Andrückschrauben 26-31 auf, mit denen eine vordefinierte Andrückkraft eingestellt werden kann, mit der sich die Schraubmutter gegen die Stützfläche 23 abstützt. In den Figuren 1 bis 4 ist schematisch ein rechteckiger Abschnitt 32 einer Gehäusewand dargestellt, an dem das Außengewinde 25 befestigt ist. Eine Ringscheibe 33 umgibt das Außengewinde 25 und bildet die Stützfläche 23, auf der sich die Andrückschrauben 26-31 abstützen. Jede Andrückschraube 26-31 weist an ihrem nahe der Stützfläche 23 liegenden Ende einen Druckabschnitt 34 auf, der frei von Gewindegängen ist. Am gegenüberliegenden Ende weist jede Andrückschraube 31-36 eine Aufnahme 35 für ein Schraubwerkzeug auf. In den Zeichnungen ist jede Andrückschraube 26-31 mit einer Sechskant-Aufnahme 35 für einen Schraubschlüssel versehen. Andere bekannte Aufnahmen für Schraubwerkzeuge (Inbus, Torx) können gewählt werden. Die Druckabschnitte 34 und Aufnahmen 35 sind nur vereinzelt in den Zeichnungen mit Bezugszeichen versehen.

In Figur 8 ist zu erkennen, dass das Mutterteil 1 zwei Andrückschrauben 27, 28 aufweist, die sich in einem Materialabschnitt erstrecken, der von der Oberseite 22 bis zur Unterseite 21 der Schraubmutter reicht. Für diese Andrückschrauben 27, 28 sind Andrückgewinde 37, 38 vorgesehen, die sich von der Oberseite 22 der Schraubmutter bis zu ihrer Unterseite 21 erstrecken können. Die Länge der Andrückgewinde 37, 38 kann aber auch geringer sein, als die Länge der Bohrung durch die Schraubmutter. Die Bohrung kann auch Abschnitte ohne Gewindegänge aufweisen.

Dagegen ist die Andrückschraube 26 in ein Andrückgewinde 36 eingeschraubt, die sich lediglich von der Unterseite 21 der Schraubmutter bis zur gewölbten Führungsfläche 9 des Verriegelungsarms 5 erstreckt. Ebenso ist in Figur 9 zu erkennen, dass die zwei Andrückschrauben 30, 31 in Andrückgewinde 40, 41 aufgenommen sind, die sich von der Oberseite 22 bis zur Unterseite 21 der Schraubenmutter erstrecken. Dagegen ist die Andrückschraube 29 in ein Andrückgewinde 39 eingeschraubt, das sich durch den Verriegelungsarm 7 des zweiten Mutterteils 2 von der Unterseite 21 bis zur gewölbten Führungsfläche 11 erstreckt (siehe auch Fig. 7).

Um die Anordnung der Andrückschrauben 26-31 im Bereich der Verriegelungsarme 5-9 zu ermöglichen, weisen die an der Oberseite 22 der Schraubmutter liegenden zweiten Verriegelungsarme 6, 8 eine Aussparung 42 ,43 auf, die von den entsprechenden Andrückschrauben 29, 26 in den Andrückgewinden 39, 36 der Verriegelungsarme 7, 5 durchragt werden. Die Aussparungen 42, 43 sind als Langloch ausgebildet, dessen Breite etwas größer als der Durchmesser der hindurchragenden Andrückschraube 29, 26 ist. Die Mittellinie jedes der Langlöcher 42, 43 erstreckt sich gerade und parallel zur Verschieberichtung, in der die Mutterteile 1, 2 zueinander verschoben werden. Insbesondere in Fig. 7 ist zu erkennen, dass die Mutterteile 1, 2 nicht mit in die ersten Verriegelungsarme 5, 7 eingeschraubten Andrückschrauben 26, 29 zusammengefügt werden können. Zum Zusammenfügen ist es erforderlich, die Andrückschrauben 26, 29 aus den Andrückgewinden 36, 39 der Verriegelungsarme 5, 7 zu entfernen. Erst wenn die Mutterteile 1, 2 in die in Fig. 5 erkennbare geöffnete Stellung zusammengefügt sind, in der die Langlöcher 42, 43 in den zweiten Verriegelungsarmen 6, 8 mit den Andrückgewinden 39, 36 in den ersten Verriegelungsarmen 7, 5 fluchten, können die Andrückschrauben 29, 26 durch die Langlöcher 42, 43 hindurch in die Andrückgewinde 39, 36 geführt und dort eingeschraubt werden. Die in die ersten Verriegelungsarme 5, 7 an der Unterseite 21 der Schraubenmutter eingeschraubten Andrückschrauben 26, 29 legen das Mutterteil 2 am Mutterteil 1 fest, so dass lediglich eine Verschiebung von der in Fig. 5 dargestellten geöffneten Stellung in die in Fig. 1 dargestellte Verwendungsposition möglich ist.

In der in Fig. 1 erkennbaren geschlossenen Verwendungsposition kann die Schraubenmutter entlang des Außengewindes 25 zur Stützfläche 23 hin festgeschraubt werden, bis die Druckabschnitte 34 der Andrückschrauben 26-31 gegen die Stützfläche 23 anliegen. Hierzu ist keine besonders große Kraft erforderlich. Das einfache Anliegen der Druckabschnitte 34 der Andrückschrauben 26-31 gegen die Stützfläche 23 ist ausreichend, um ein Verschwenken und Öffnen der Mutterteile 1, 2 zu verhindern. Nun können mit einem Schraubwerkzeug (Schraubenschlüssel, nicht dargestellt) mittels die Sechskant-Aufnahmen 35 der Andrückschrauben 36-31 ein Drehmoment auf die Andrückschrauben 26-31 aufgebracht werden, so dass sich die Druckkraft auf die Stützfläche 23 erhöht. Das Drehmoment zum Anziehen der Andrückschrauben 26-31 ist für die Erzeugung einer bestimmten Druckkraft sehr viel geringer als ein entsprechendes Drehmoment zum Erzeugen der gleichen Drucckraft durch Verdrehen der Schraubenmutter selbst auf dem Außengewinde 25. Es sei darauf hingewiesen, dass sich die Druckabschnitte 34 der Andrückschrauben 26-31 nicht notwendigerweise auf eine Ringscheibe 33 abstützen müssen. Wenn der Gehäusewandabschnitt 32, an dem das Außengewinde 25 befestigt ist, eine ausreichende Stabilität aufweist, können sich die Druckabschnitte 34 der Andrückschrauben 26-31 auch unmittelbar auf dem Gehäusewandabschnitt 32 abstützen.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1: erstes Mutterteil
- 2: zweites Mutterteil
- 3: Innengewindeabschnitt
- 4: Innengewindeabschnitt
- 5: Verriegelungsarm
- 6: Verriegelungsarm
- 7: Verriegelungsarm
- 8: Verriegelungsarm
- 9: gewölbte Führungsfläche
- 10: gewölbte Führungsfläche
- 11: gewölbte Führungsfläche
- 12: gewölbte Führungsfläche
- 13: achsparallele Führungsfläche
- 14: achsparallele Führungsfläche
- 15: achsparallele Führungsfläche
- 16: achsparallele Führungsfläche
- 17: achsparallele Führungsfläche
- 18: achsparallele Führungsfläche
- 19: achsparallele Führungsfläche
- 20: achsparallele Führungsfläche
- 21: erste axiale Endfläche, Unterseite
- 22: zweite axiale Endfläche, Oberseite
- 23: Stützfläche

- 25: Außengewinde
- 26: Andrückschraube
- 27: Andrückschraube
- 28: Andrückschraube
- 29: Andrückschraube
- 30: Andrückschraube
- 31: Andrückschraube
- 32: Gehäusewandabschnitt
- 33: Ringscheibe
- 34: Druckabschnitt
- 35: Sechskant-Aufnahme
- 36: Andrückgewinde
- 37: Andrückgewinde
- 38: Andrückgewinde
- 39: Andrückgewinde
- 40: Andrückgewinde
- 41: Andrückgewinde
- 42: Aussparung, Langloch
- 43: Aussparung, Langloch

## Patentansprüche

1. Schraubenmutter mit einem Innengewinde und zwei Mutterteilen (1, 2), wobei jedes der Mutterteile (1, 2) einen Abschnitt des Innengewindes aufweist, der in radialer Richtung auf ein Außengewinde (25) aufschiebbar ist, und wobei die Mutterteile (1, 2) miteinander zusammenwirkende Verbindungselemente aufweisen, welche eine relative Verschiebung der Mutterteile (1, 2) in einer radial zur Achse des Innengewindes verlaufenden Richtung bis in eine Verwendungsposition ermöglichen, in der das Innengewinde der Schraubenmutter das Außengewinde (25) mit geringem Spiel umgreift,
wobei die Verbindungselemente Führungsflächen (9-20) aufweisen, die die Mutterteile (1, 2) der Schraubenmutter beim Verschieben in die Verwendungsposition in einer Rotationsbewegung um eine quer zur Achse des Innengewindes verlaufende Rotationsachse führen, wobei jedes Mutterteil (1, 2) mindestens einen ersten Verriegelungsarm (5,7) aufweist, der auf einer Seite eine Führungsfläche (9, 11) aufweist, welche die Rotationsbewegung beim Verschieben der Mutterteile (1, 2) bewirkt und gegen eine komplementäre Führungsfläche (10, 12) an einem zweiten Verriegelungsarm (6, 8) des anderen Mutterteils (1, 2) anliegt,
**dadurch gekennzeichnet, dass**
die Schraubenmutter mehrere Andrückgewinde (36-41) aufweist, die um das Innengewinde herum angeordnet sind und die Andrückschrauben (26-31) aufnehmen, welche in axialer Richtung aus einer ersten axialen Endfläche (21) der Schraubenmutter herausschraubbar sind und im Bereich einer zweiten axialen Endfläche (22) der Schraubenmutter eine Aufnahme (35) für ein Schraubwerkzeug aufweisen, wobei mindestens ein Andrückgewinde (36, 39) in dem ersten Verriegelungsarm (5, 7) angeordnet ist, der die erste axiale Endfläche (21) aufweist, und wobei der mit dem ersten Verriegelungsarm (5,7) zusammenwirkende zweite Verriegelungsarm (6,8) mit der zweiten axialen Endfläche (22) eine Aussparung (42,43) aufweist, welche von der Andrückschraube (29, 26) durchragt wird.

2. Schraubenmutter nach Anspruch 1, **dadurch gekennzeichnet, dass** die Aussparung ein Langloch (42, 43) ist, das die Andrückschraube (29, 26) beim Verlagern des zweiten Mutterteils (2) zum ersten Mutterteil (1) aus der Verwendungsposition heraus führt.

3. Schraubenmutter nach einem der vorangehenden Ansprüche, **dadurch gekennzeichnet, dass** die Innengewindeabschnitte (3,4) der zwei Mutterteile (1, 2) entlang einer sich in Richtung der Gewindeachse erstreckenden Teilungsebene getrennt sind und dass jedes Mutterteil (1, 2) der Schraubenmutter zwei Verriegelungsarme (5,6 bzw. 7,8) aufweist, die zu beiden Seite einer rechtwinklig zur Teilungsebene verlaufenden Mittelebene angeordnet sind.

4. Schraubenmutter nach einem der vorangehenden Ansprüche, **dadurch gekennzeichnet, dass** die Führungsflächen (9-12) geneigt oder gewölbt sind.

5. Schraubenmutter nach einem der vorangehenden Ansprüche, **dadurch gekennzeichnet, dass** jedes Mutterteil (1, 2) mindestens ein Andrückgewinde (37, 38, 40, 41)) in einem Bereich aufweist, in dem sich das Mutterteil (1, 2) von der ersten axialen Endfläche (21) bis zur zweiten axialen Endfläche (22) erstreckt.

6. Schraubenmutter nach einem der vorangehenden Ansprüche, **dadurch gekennzeichnet, dass** die Andrückschraube (29, 26), die das Langloch (42, 43) des zweiten Verriegelungsarms (6, 8) durchragt und in das Andrückgewinde (39, 36) des ersten Verriegelungsarms (5, 7) eingeschraubt ist, die zwei Mutterteile (1, 2) verschiebbar aber untrennbar miteinander verbindet.

## Claims

1. A nut having an internal thread and two nut parts (1, 2), each of the nut parts (1, 2) having a section of the internal thread which is radially slidable onto an external thread (25), the nut parts (1, 2) having co-operating connecting elements which permit relative displacement of the nut parts (1, 2) in a direction running radially to the axis of the internal thread until reaching a use position in which the internal thread of the nut engages around the external thread (25) with a small clearance,
wherein the connecting elements have guide surfaces (9-20) which guide the nut parts (1, 2) of the screw nut in a rotational movement about an axis of rotation extending transversely to the axis of the internal thread when displaced into the use position,
wherein each nut part (1, 2) has at least one first locking arm (5, 7) which has on one side a guide surface (9, 11) which induces the rotational movement when the nut parts (1, 2) are displaced and bears against a complementary guide surface (10, 12) on a second locking arm (6, 8) of the other nut part (1, 2),
**characterised in that**
the nut has a plurality of pressure threads (36-41) which are arranged around the internal thread and which receive pressure screws (26-31) that can be screwed out in the axial direction from a first axial end face (21) of the nut and have a receiving means (35) for a screwing tool in the region of a second axial end face (22) of the nut, wherein at least one pressure thread (36, 39) is arranged in the first locking arm (5, 7), which has the first axial end face (21), and wherein the second locking arm (6, 8) with the second axial end face (22), which cooperates with the first locking arm (5, 7), has a recess (42, 43), through which recess the pressure screw (29, 26) projects.

2. The nut according to claim 1, **characterised in that** the recess is an elongate hole (42, 43) which guides the pressure screw (29, 26) when the second nut part (2) is displaced with respect to the first nut part (1) out of the use position.

3. The nut according to any one of the preceding claims, **characterised in that** the internal thread sections (3, 4) of the two nut parts (1,2) are separated along a parting plane extending in the direction of the thread axis, and **in that** each nut part (1,2) of the nut has two locking arms (5,6 and 7,8 respectively) arranged on either side of a median plane perpendicular to the parting plane.

4. The nut according to one of the preceding claims, **characterised in that** the guide surfaces (9-12) are inclined or curved.

5. The nut according to any one of the preceding claims, **characterised in that** each nut part (1, 2) has at least one pressure thread (37, 38, 40, 41) in a region in which the nut part (1, 2) extends from the first axial end face (21) to the second axial end face (22).

6. The nut according to one of the preceding claims, **characterised in that** the pressure screw (29, 26), which projects through the elongate hole (42, 43) of the second locking arm (6, 8) and is screwed into the pressure thread (39, 36) of the first locking arm (5, 7), connects the two nut parts (1, 2) displaceably but inseparably to one another.

## Revendications

1. Ecrou comprenant un filetage interne et deux éléments d'écrou (1, 2), chacune des parties d'écrou (1, 2) présentant un tronçon du filetage interne qui peut être introduit dans le sens radial sur un filetage externe (25), et les parties d'écrou (1, 2) présentant des éléments de liaison coopérant les uns avec les autres, lesquelles permettent un déplacement relatif des parties d'écrou (1, 2) dans une direction agencée radialement à l'axe du filetage interne jusque dans une position d'utilisation dans laquelle le filetage interne de l'écrou s'engage autour du filetage externe (25) avec un faible jeu,
les éléments de liaison présentant des surfaces de guidage (9-20) qui guident les parties (1, 2) de l'écrou de la vis lors du déplacement dans la position d'utilisation dans un mouvement de rotation autour d'un axe de rotation s'étendant transversalement à l'axe du filetage interne,
chaque partie d'écrou (1, 2) présentant au moins un premier bras de verrouillage (5, 7) qui présente sur un côté une surface de guidage (9, 11) qui entraîne le mouvement de rotation lors du déplacement des parties d'écrou (1, 2) et qui s'applique contre une surface de guidage complémentaire (10, 12) sur un deuxième bras de verrouillage (6, 8) de l'autre partie d'écrou (1, 2),
**caractérisé en ce que**
l'écrou présente plusieurs filetages de pression (36-41) qui sont disposés autour du filetage intérieur et qui reçoivent des vis de pression (26-31), qui peuvent être vissées pour sortir d'une première face d'extrémité axiale (21) de l'écrou dans la direction axiale et qui présentent, dans la zone d'une deuxième face d'extrémité axiale (22) de l'écrou, un moyen de réception (35) pour un outil de vissage, au moins un filetage de pression (36, 39) étant disposé dans le premier bras de verrouillage (5, 7), qui présente la première face d'extrémité axiale (21), et un évidement (42, 43) à travers lequel la vis de pression (29, 26) fait saillie étant disposé dans le deuxième bras de verrouillage (6, 8), qui coopère avec le premier bras de verrouillage (5, 7) et qui présente la deuxième face d'extrémité axiale (22).

2. Ecrou selon la revendication 1, **caractérisé en ce que** l'évidement est un trou oblong (42, 43) qui guide la vis de pression (29, 26) lors du déplacement de la deuxième partie d'écrou (2) hors de la position d'utilisation par rapport à la première partie d'écrou (1).

3. Ecrou selon l'une des revendications précédentes, **caractérisé en ce que** les tronçons du filetage interne (3,4) des deux parties d'écrou (1,2) sont séparées le long d'un plan de séparation s'étendant en direction de l'axe de filetage, et **en ce que** chaque partie d'écrou (1,2) comporte deux bras de verrouillage (5,6 et 7,8 respectivement) disposés de part et d'autre d'un plan médian s'étendant à angle droit par rapport au plan de séparation.

4. Ecrou selon l'une des revendications précédentes, **caractérisé en ce que** les surfaces de guidage (9-12) sont inclinées ou incurvé.

5. Ecrou selon l'une des revendications précédentes, **caractérisé en ce que** chaque partie d'écrou (1, 2) comprend au moins un filetage de pression (37, 38, 40, 41) dans une région dans laquelle la partie d'écrou (1, 2) s'étend de la première face d'extrémité axiale (21) à la deuxième face d'extrémité axiale (22).h

6. Ecrou selon l'une des revendications précédentes, **caractérisé en ce que** la vis de pression (29, 26), qui saille à travers le trou oblong (42, 43) du deuxième bras de verrouillage (6, 8) et qui est vissée dans le filetage de pression (39, 36) du premier bras de verrouillage (5, 7), relie les deux parties de l'écrou (1, 2) l'une à l'autre de manière mobile mais inséparable.
